# EUROPEAN PATENT APPLICATION

(11) **EP 2 878 205 A1**
(43) Date of publication of application: **03.06.2015**
(21) Application number: 13822841.6
(22) Date of filing: 26.06.2013
(51) Int. Cl.: A23G 1/00, A23G 1/30, A23G 3/00, A23G 3/34

(54) **IMPREGNATED CHOCOLATE CONFECTIONERY**

(30) Priority: 27.07.2012 JP 2012167554
(71) Applicant: Lotte Co., Ltd., Tokyo 160-0023 (JP)
(72) Inventor: ISHIKAWA, Maya, Saitama-shi Saitama 336-8601 (JP); TADOKORO, Keiji, Saitama-shi Saitama 336-8601 (JP); KOYAMA, Toshiyuki, Saitama-shi Saitama 336-8601 (JP); ASHITANI, Hiroaki, Saitama-shi Saitama 336-8601 (JP)
(74) Representative: Witte, Weller & Partner Patentanwälte mbB
(86) International application number: PCT/JP2013/067554
(87) International publication number: WO 2014/017244

(57) **Abstract**

A chocolate-impregnated confectionery product is provided, which includes a confectionery base sufficiently impregnated with chocolate, and satisfies requirements for a light (crispy) eating texture intrinsic to the confectionery base as well as a chocolate mild taste (chocolate taste) and a smooth melt-in-mouth texture intrinsic to the chocolate. The chocolate-impregnated confectionery product (10) includes a textured wafer (11) as the confectionery base, and chocolate (12) infiltrated in the textured wafer (11). The chocolate (12) is present in a weight percentage of 77 to 85 % based on the overall weight of the confectionery product. The chocolate-impregnated confectionery product (10) is novel, and has a light eating texture intrinsic to the confectionery base as well as a chocolate mild taste and a melt-in-mouth texture intrinsic to the chocolate.

## Description

### TECHNICAL FIELD

The present invention relates to a chocolate-impregnated confectionery product, and particularly to a chocolate confectionery product having an eating texture intrinsic to a confectionery base thereof as well as a chocolate mild taste.

### BACKGROUND ART

The chocolate confectionery market shifts its product trend from simple chocolate products to so-called composite chocolate products. The term "composite chocolate product" means a processed chocolate product containing less than 60 % of chocolate as specified by the Chocolate Standards. Examples of the composite chocolate products include combinations of chocolate and baked confectionery such as a biscuit and a baked snack, and combinations of chocolate and puffed confectionery such as puffed cereals.

The composite chocolate products have a lighter and milder eating texture than the simple chocolate products and, therefore, are widely accepted by consumers. However, the consumers seem to expect not only a light eating texture but also a chocolate mild taste. With such tendency, chocolate-impregnated confectionery products gain popularity.

The term "chocolate-impregnated confectionery product" means a confectionery product such as a baked confectionery product impregnated with chocolate. Examples of the confectionery product to be generally used as a confectionery base include biscuits, cookies, and puffs and cereals prepared by a special machine called extruder. The chocolate-impregnated confectionery product features combination of an eating texture intrinsic to the confectionery base and a chocolate mild taste. The chocolate-impregnated confectionery product is sufficient in chocolate mild taste intrinsic to the chocolate but insufficient in smooth melt-in-mouth texture. Problematically, this is because the melt-in-mouth texture is impaired by the crunchiness of the confectionery base and a multiplicity of broken pieces generated when the chocolate-impregnated confectionery product is bitten.

Prior art related to the chocolate-impregnated confectionery product includes an impregnated food and an impregnated food production method disclosed in Patent Literature 1, a chocolate-containing food production method disclosed in Patent Literature 2, and a food impregnation method disclosed in Patent Literature 3.

### CITATION LIST

### PATENT LITERATURE

PTL 1: Japanese Patent No. 4673257
PTL 2: Japanese Patent No. 3766661
PTL 3: JP-2003-174850-A

### SUMMARY OF THE INVENTION

### PROBLEM TO BE SOLVED BY THE INVENTION

Previously proposed or commercialized art related to the chocolate-impregnated confectionery product fails to satisfy the requirements for the eating texture (light eating texture) intrinsic to the confectionery base, and the mild taste (chocolate taste) and the smooth melt-in-mouth texture intrinsic to the chocolate, thereby needing improvement.

It is therefore an object of the present invention to provide a chocolate-impregnated confectionery product including a confectionery base sufficiently impregnated with chocolate and satisfying the requirements for the light (crispy) eating texture intrinsic to the confectionery base, and the mild taste (chocolate taste) and the smooth melt-in-mouth texture intrinsic to the chocolate.

### MEANS FOR SOLVING THE PROBLEMS

According to an inventive aspect of claim 1 to achieve the aforementioned object, there is provided a chocolate-impregnated confectionery product which includes a textured confectionery base and chocolate infiltrated in the confectionery base, wherein the chocolate is present in a weight percentage of 77 to 85 % based on the overall weight of the confectionery product.

According to an inventive aspect of claim 2, the textured confectionery base includes a plate base portion and a projection provided on at least one of opposite surfaces of the base portion, and the projection has a height that is substantially equal to the thickness of the base portion in the chocolate-impregnated confectionery product of claim 1.

According to an inventive aspect of claim 3, the projection includes a lattice-shaped projection as seen in plan in the chocolate-impregnated confectionery product of claim 1 or 2.

According to an inventive aspect of claim 4, the textured confectionery base is a confectionery base prepared by baking a batter including flour and greater than 50 wt% of water based on the overall weight of the batter and having a post-baking weight that is less than a weight obtained by subtracting the weight of the water from the overall weight of the batter in the chocolate-impregnated confectionery product of any one of claims 1 to 3.

According to an inventive aspect of claim 5, the textured confectionery base is a textured wafer in the chocolate-impregnated confectionery product of any one of claims 1 to 4.

According to an inventive aspect of claim 6, there is provided a chocolate-impregnated confectionery product which includes a textured wafer, and chocolate infiltrated in the textured wafer, wherein the textured wafer includes a plate base portion and a projection provided on at least one of opposite surfaces of the base portion, and the projection has a height substantially equal to the thickness of the base portion.

### EFFECTS OF THE INVENTION

According to the present invention, the novel chocolate-impregnated confectionery product is provided, which is satisfactory as a chocolate product, and has a pleasant and light eating texture intrinsic to the confectionery base (e.g., wafer) as well as a mild taste and a smooth melt-in-mouth texture intrinsic to the chocolate with a sufficient amount of chocolate exuding out of the confectionery product.

Such effects can be produced for the following reasons. First, the wafer herein used as the confectionery base has a very light melt-in-mouth texture with a multiplicity of minute cells contained therein, and does not impair the smooth melt-in-mouth texture of the chocolate. Where a conventional thin wafer is used as the wafer confectionery base, only a small amount of chocolate can be infiltrated into the wafer. Therefore, the resulting chocolate-impregnated confectionery product is liable to be unsatisfactory in taste, eating texture and appearance, thereby providing a cheap impression. In the present invention, in contrast, a textured wafer having a thick projection is provided for use as the confectionery base.

A textured confectionery base having a very light melt-in-mouth texture with a multiplicity of minute cells contained therein as in the wafer may be used instead of the textured wafer.

As described in claim 2, the textured confectionery base, particularly the textured wafer, may have a projection provided on one of the opposite surfaces of the plate base portion and having a height substantially equal to the thickness of the base portion, or may have projections respectively provided on the opposite surfaces of the base portion and each having a height substantially equal to the thickness of the base portion. The conventional wafer is produced by baking a water-rich liquid batter through a so-called sandwich-baking process. If an attempt is made to produce a wafer having a greater uniform thickness through the sandwich-baking process simply by increasing a distance between two baking plates (i.e., upper and lower baking plates), the batter does not properly spread as having a uniform thickness, or a great amount of the batter flows out from between the baking plates, making it difficult to stably produce and supply the wafer. According to the present invention, the textured wafer having a greater thickness is produced by using baking plates each having a greater texture pattern. The textured wafer includes a multiplicity of minute cells formed therein by evaporation of water and, therefore, has a smooth melt-in-mouth texture comparable to the conventional thin wafer and yet has a sufficient bulkiness and a light eating texture.

### BRIEF DESCRIPTION OF THE DRAWINGS

FIGS. 1A and 1B are a schematic appearance view and a schematic sectional view taken along a line B-B in FIG. 1A for explaining a chocolate-impregnated confectionery product 10 according to one embodiment of the present invention.
FIG. 2 is a flow chart for explaining a chocolate impregnating process for impregnating a textured wafer 11 with chocolate 12.
FIG. 3 is a graph showing evaluation results for crispy light eating texture.
FIG. 4 is a graph showing evaluation results for chocolate mild taste.
FIG. 5 is a graph showing evaluation results for smooth melt-in-mouth texture.

### EMBODIMENTS OF THE INVENTION

An embodiment of the present invention will hereinafter be described with reference to the attached drawings.

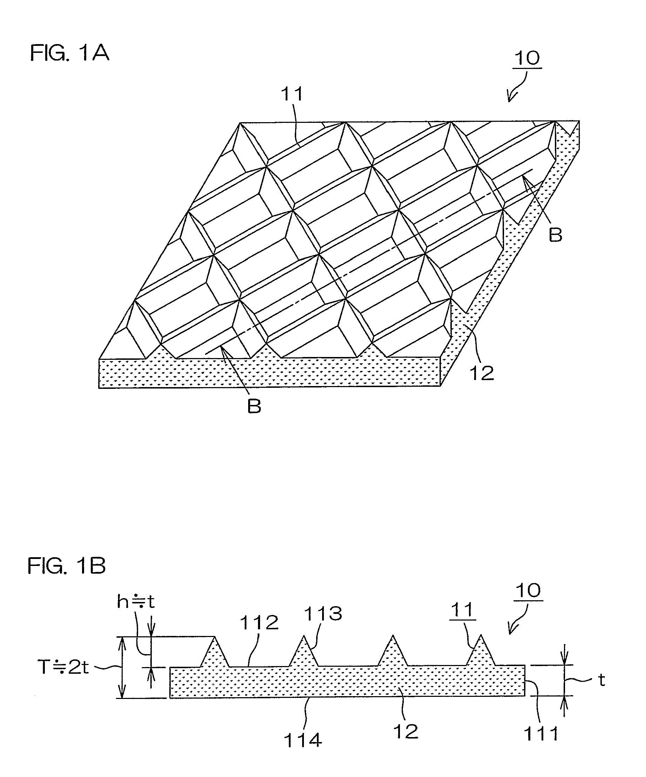

FIGS. 1A and 1B are a schematic appearance view and a schematic sectional view taken along a line B-B in FIG. 1A for explaining a chocolate-impregnated confectionery product 10 according to one embodiment of the present invention.

The chocolate-impregnated confectionery product 10 according to this embodiment includes a textured wafer 11 and chocolate 12 infiltrated in the textured wafer 11.

The textured wafer 11 is used as a confectionery base to be impregnated with the chocolate 12. The wafer is a baked confectionery base including a multiplicity of minute internal cells and having a smooth melt-in-mouth texture. For the characteristic light eating texture, the wafer is generally produced by baking a water-rich liquid batter between two baking plates (i.e., upper and lower baking plates) through a so-called sandwich-baking process. When the batter is spread between the two baking plates, a greater amount of the batter flows out from between the two baking plates. Therefore, it is difficult to bake a wafer having a greater uniform thickness simply by increasing a distance between the baking plates. For this reason, the conventional wafer generally has a smaller thickness on the order of about 2 to about 3 mm. For production of a thicker wafer, it is necessary to use a plurality of wafers as sandwich wafers, which are stacked one on another with a cream or the like interposed therebetween.

The inventors of the present invention produced a prototype product by infiltrating chocolate into a common wafer confectionery base (having a thickness of about 2 to about 3 mm). Even where the common wafer confectionery base was impregnated with a sufficient amount of chocolate, the resulting chocolate-impregnated confectionery product was unsatisfactory in taste, eating texture and appearance because of the smaller thickness of the base confectionery base, thereby providing a cheap impression.

In this embodiment, therefore, the textured wafer 11 is used as the confectionery base to be impregnated with the chocolate.

As shown in FIG. 1B, the textured wafer 11 includes a plate base portion 111, and a projection 113 provided on one surface 112 of the base portion 111 and having a triangular shape as seen in section. Provided that the base portion 111 has a thickness t, the projection 113 has a height h that is substantially equal to the thickness t (t ≈ h). More specifically, t = 2 to 3 mm and h = 2.5 to 3 mm. The wafer including the projection 113 has a thickness T of about 5.5 to about 6 mm.

Thus, the textured wafer 11 has a thickly-baked textured structure with the projection 113.

The textured wafer 11 according to this embodiment is configured such that the projection 113 is provided only on the one surface 112 of the plate base portion 111. Alternatively, projections 113 may be respectively provided on opposite surfaces 112, 114 of the base portion 111.

The sectional shape of the projection 113 is not limited to the triangular shape, but may be any projected shape.

In this embodiment, the projection 113 has a lattice shape as seen in plan, but may include a plurality of linear projections arranged parallel to each other, or include a multiplicity of independent chevron-shaped projections.

What is important is that the textured wafer 11 including the projection 113 has an overall thickness increased by providing the projection 113 on the surface of the thin plate base portion 111.

In the present invention, a textured confectionery base comparable in light eating texture and melt-in-mouth texture to the textured wafer 11 may be used instead of the textured wafer 11. Examples of the textured confectionery base include baked confectionery bases produced by using grain powder such as corn powder instead of flour in the formulation for the wafer.

The chocolate 12 is infiltrated in the textured wafer 11. The wafer 11 having an increased thickness because of its textured structure has a multiplicity of internal cells, which are fully filled with the chocolate 12.

Therefore, the chocolate-impregnated confectionery product 10 has a chocolate mild taste as well as a smooth melt-in-mouth texture intrinsic to the chocolate. The textured wafer 11 has a greater thickness, and yet has a smooth melt-in-mouth texture. Therefore, the textured wafer 11 provides a sufficient wafer eating texture, but does not impair the chocolate smooth melt-in-mouth texture. That is, the melt-in-mouth texture of the chocolate 12 sufficiently infiltrated in the textured wafer 11 and the melt-in-mouth texture of the textured wafer 11 are exquisitely balanced in the chocolate-impregnated confectionery product 10.

In this embodiment, the chocolate-impregnated confectionery product 10 has an overall weight of, for example, 2.0 g per piece, and the weight percentage of the chocolate is, for example, 82 % based on the overall weight of the confectionery product.

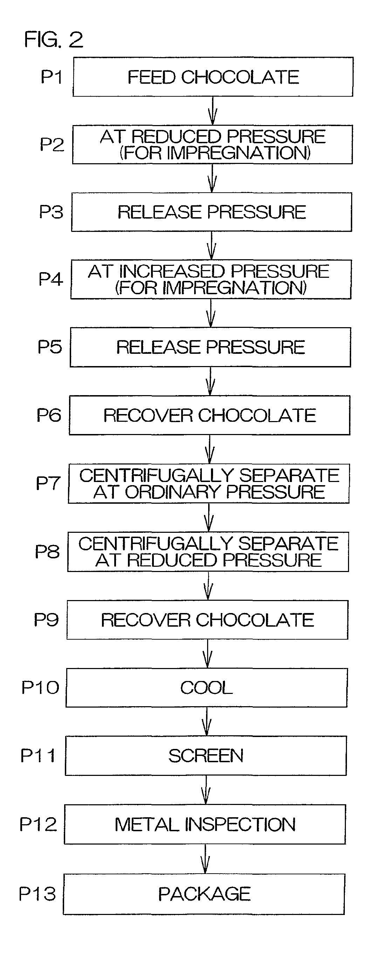

Referring to FIG. 2, a method of producing the chocolate-impregnated confectionery product 10 according to this embodiment will be next described.

In a chocolate impregnating process, a basket in which a textured wafer 11 is contained is accommodated in a treatment vessel, which is in turn sealed. Then, the internal pressure of the treatment vessel is reduced. Chocolate 12 is fed into the treatment vessel from a tank by a pressure difference (Step P1), whereby the treatment vessel is sufficiently filled with the chocolate 12. After a lapse of a predetermined standby period (Step P2), the internal pressure of the vessel is returned to an ordinary pressure (Step P3). Then, the internal pressure of the vessel is increased by supplying gas into the vessel, and the chocolate 12 is infiltrated into the textured wafer 11 for a predetermined period (Step P4). Thus, an additional amount of the chocolate 12 is infiltrated into the inside of the textured wafer 11 in addition to the chocolate 12 previously infiltrated into the textured wafer 11 by a pressure difference occurring when the internal pressure is returned from the reduced pressure level (Step P2) to the ordinary pressure level (Step P3). After the internal pressure of the vessel is released (Step P5), excess chocolate not infiltrated into the textured wafer 11 is recovered (Step P6). Further, the basket containing the resulting textured wafer 11 is rotated in the treatment vessel, whereby excess chocolate adhering to surfaces of the textured wafer 11 is centrifugally separated (Step P7). Thereafter, excess chocolate is further centrifugally separated at a reduced pressure (Step P8), whereby chocolate not completely removed by the ordinary pressure centrifugal separation in Step P7 is removed. The excess chocolate thus centrifugally separated is recovered (Step P9). Thus, the chocolate impregnating process is completed. Subsequently, the textured wafer 11 thus impregnated with the chocolate 12 in the treatment vessel is fed into a cooling tunnel by a belt conveyor to be thereby cooled. Thus, the chocolate 12 is cooled to be solidified (Step P10). Thereafter, a defective screening step for screening out a defective product (Step P11) and a metal inspection step for preventing metal contamination (Step P12) are performed. Then, the resulting products are packaged in a package prepared in conformity with product specifications (Step P13).

The chocolate impregnating process is thus performed to impregnate the textured wafer 11 with the chocolate. This production process can be performed by means of a relatively simple production facility. The production can be easily achieved not only in a domestic production facility but also in a foreign production facility.

### EXAMPLES

The weight percentages of the textured wafer 11 and the infiltrated chocolate 12 in the chocolate-impregnated confectionery product 10 produced according to the present invention are shown below in Tables 1 and 2.

**Table 1**

| | Weight | Percentage |
|---|---|---|
| Textured wafer 11 | 0.36 g | 23.0 % |
| Chocolate 12 | 1.21 g | 77.0 % |
| Total | 1.57 g | 100.0 % |

**Table 2**

| | Weight | Percentage |
|---|---|---|
| Textured wafer 11 | 0.36 g | 15.0 % |
| Chocolate 12 | 2.04 g | 85.0 % |
| Total | 2.40 g | 100.0 % |

In specific inventive examples, as shown in Tables 1 and 2, the textured wafers 11 having an average weight of 0.36 g were each used as the confectionery base, and chocolate was infiltrated into the textured wafers 11 by the aforementioned production method. The weight of the infiltrated chocolate was 1.21 g to 2.04 g. That is, the weight percentage of the chocolate was 77 % to 85 % based on the overall weight of the chocolate-impregnated confectionery product 10.

More preferably, the weight percentage of the chocolate was 79 % to 83 % based on the overall weight of the chocolate-impregnated confectionery product 10. If the weight percentage of the chocolate 12 is less than 77 % based on the overall weight of the chocolate-impregnated confectionery product 10, the chocolate 12 is insufficiently infiltrated into the multiplicity of internal cells of the textured wafer 11. Therefore, the resulting confectionery product is unsatisfactory in taste, thereby providing a cheap impression. If the weight percentage of the chocolate 12 is greater than 85 % based on the overall weight of the chocolate-impregnated confectionery product 10, the number of the internal cells of the textured wafer 11 should be excessively increased, so that the textured wafer 11 is liable to be very fragile. Therefore, the resulting confectionery product fails to have a light eating texture.

Next, the formulation for the textured wafer 11 and the formulation for the chocolate 12 in one inventive example are shown below in Table 3.

**Table 3 - Dual formulation (wafer)**

| Formulation for wafer | | Formulation for chocolate | |
|---|---|---|---|
| Flour | 100 | Sugar | 36.5 |
| Vegetable fats and oils | 7 | Cacao mass | 18 |
| Starch | 5 | Whole milk powder | 17 |
| Sugar | 5 | Vegetable fats and oils | 16 |
| Dry whole egg | 1 | Cocoa butter | 12 |
| Water | 156 | Emulsifier | 0.4 |
| Salt | 0.5 | Flavoring agent | 0.1 |
| Coloring agent | 3 | | 100 |
| Baking powder | 1.5 | | |
| Emulsifier | 1 | | |
| | 280 | | |
| | ↓ | | |
| Post-baking weight | 111 | | |

As shown in Table 3, a batter for the textured wafer 11 contained flour and water as major components. The batter for the wafer features that the weight of the water accounts for greater than 50 % of the overall weight of the batter.

Therefore, a great amount of water evaporates when the batter for the wafer is baked. Thus, a multiplicity of minute cells are formed in the textured wafer 11 to thereby provide the light eating texture and the melt-in-mouth texture intrinsic to the wafer. As shown in Table 3, more specifically, the weight of the batter was 280 g, while the post-baking weight was 111 g.

An evaluation form used for the organoleptic evaluation of the chocolate-impregnated confectionery product 10 according to the example of the present invention is shown in Table 4.

**Table 4**

| EVALUATION OF CHOCOLATE CONFECTIONERY PRODUCTS Panelist number ( ) | | | | |
|---|---|---|---|---|
| | | | | |
| <Please taste the numbered confectionery samples from the left> Please put the confectionery samples in decreasing order of "CRISPY LIGHT EATING TEXTURE" | | | | |
| Sample Nos. 746, 654, 168, 375 and 938 | | | | |
| 1. Please list the numbers of the confectionery samples in decreasing order of "CRISPY LIGHT EATING TEXTURE" in the following blanks. | | | | |
| More remarkable | | | | Less remarkable |
| | | | | |
| 2. Any comments? | | | | |
| | | | | |
| <Please taste the numbered confectionery samples from the left> Please put the confectionery samples in decreasing order of "CHOCOLATE MILD TASTE" | | | | |
| Sample Nos. 375, 746, 938, 168 and 654 | | | | |
| 1. Please list the numbers of the confectionery samples in decreasing order of "CHOCOLATE MILD TASTE" in the following blanks. | | | | |
| More remarkable | | | | Less remarkable |
| | | | | |
| 2. Any comments? | | | | |
| | | | | |
| <Please taste the numbered confectionery samples from the left> Please put the confectionery samples in decreasing order of "SMOOTH MELT-IN-MOUTH TEXTURE" | | | | |
| The term "MELT-IN-MOUTH TEXTURE" means an eating texture that you feel when you bite and swallow the confectionery samples. | | | | |
| Sample Nos. 375, 746, 938, 168 and 654 | | | | |
| 1. Please list the numbers of the confectionery samples in decreasing order of "SMOOTH MELT-IN-MOUTH TEXTURE" in the following blanks. | | | | |
| More remarkable | | | | Less remarkable |
| | | | | |
| 2. Any comments? | | | | |

With the use of the evaluation form shown in Table 4, an organoleptic evaluation test was performed to evaluate the chocolate-impregnated confectionery product 10 by 15 panelists.

For comparative organoleptic evaluation, three types of commercially available chocolate-impregnated confectionery products and a comparative chocolate-impregnated confectionery product (produced by the inventors' company and including a thin wafer) were prepared. Commercially available products A and B are chocolate-impregnated confectionery products produced by other companies, and a commercially available product C is a chocolate-impregnated confectionery product produced by the inventors' company.

As shown in Table 4, the evaluation items include three items: (1) crisply light eating texture; (2) chocolate mild taste; and (3) smooth melt-in-mouth texture. The evaluation for the items (1) to (3) is based on a ranking method (i.e., the confectionery samples were listed in decreasing order of each of the evaluation items).

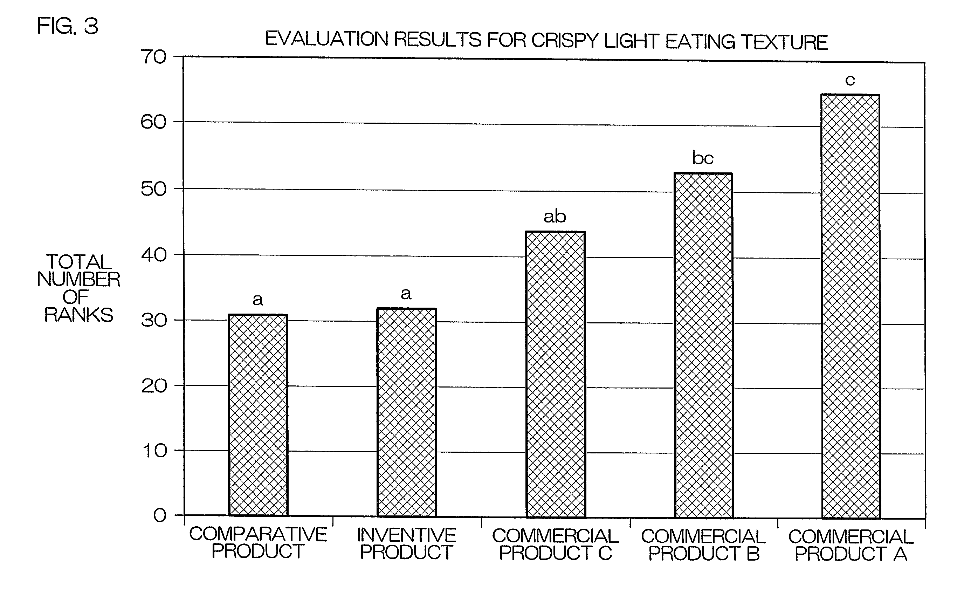

Based on the resulting ranks in the evaluation, it is first checked by the Friedman test if there is a significant difference in rank between different samples. Then, it is further checked if there is a significant difference in evaluation results between different samples. If there is a significant difference, the least significant difference (LSD) is calculated for significant difference validation in order to determine samples having a significant difference in evaluation results. With a significance level defined to be 0. 05, the evaluation results are shown in Tables 5 to 7 and FIGS. 3 to 5.

**Table 5**

| Evaluation results for crispy light eating texture | | | | |
|---|---|---|---|---|
| Sample | Total number of ranks | Significant difference | | |
| Comparative product | 31 | a | | |
| Inventive product | 32 | a | | |
| Commercial product C | 44 | a | b | |
| Commercial product B | 53 | | b | c |
| Commercial product A | 65 | | | c |

| | | | | |
|---|---|---|---|---|
| There is a significant difference between different alphabets (p<0.05) | | | | |

**Table 6**

| Evaluation results for chocolate mild taste | | | | |
|---|---|---|---|---|
| Sample | Total number of ranks | Significant difference | | |
| Inventive product | 32 | a | | |
| Commercial product A | 41 | a | b | |
| Commercial product B | 43 | a | b | |
| Commercial product C | 49 | | b | c |
| Comparative product | 60 | | | c |

| | | | | |
|---|---|---|---|---|
| There is a significant difference between different alphabets (p<0.05) | | | | |

**Table 7**

| Evaluation results for smooth melt-in-mouth texture | | | | |
|---|---|---|---|---|
| Sample | Total number of ranks | Significant difference | | |
| Inventive product | 28 | a | | |
| Commercial product B | 35 | a | b | |
| Comparative product | 42 | a | b | |
| Commercial product C | 49 | | b | |
| Commercial product A | 71 | | | c |

| | | | | |
|---|---|---|---|---|
| There is a significant difference between different alphabets (p<0.05) | | | | |

### (1) Crispy Light Eating Texture

The results are shown in Table 5 and FIG. 3. The comparative product, the inventive product, the commercial product C, the commercial product B and the commercial product A were ranked in this order for the crispy light eating texture based on the total number of ranks. As a result of the significant difference validation test, there was no significant difference between the comparative product, the inventive product and the commercial product C, but the comparative product and the inventive product each had a significant difference from the commercial product B and the commercial product A. Thus, the comparative product and the inventive product were proved to be more remarkable in crispy light eating texture than the commercial product B and the commercial product A.

### (2) Chocolate Mild Taste

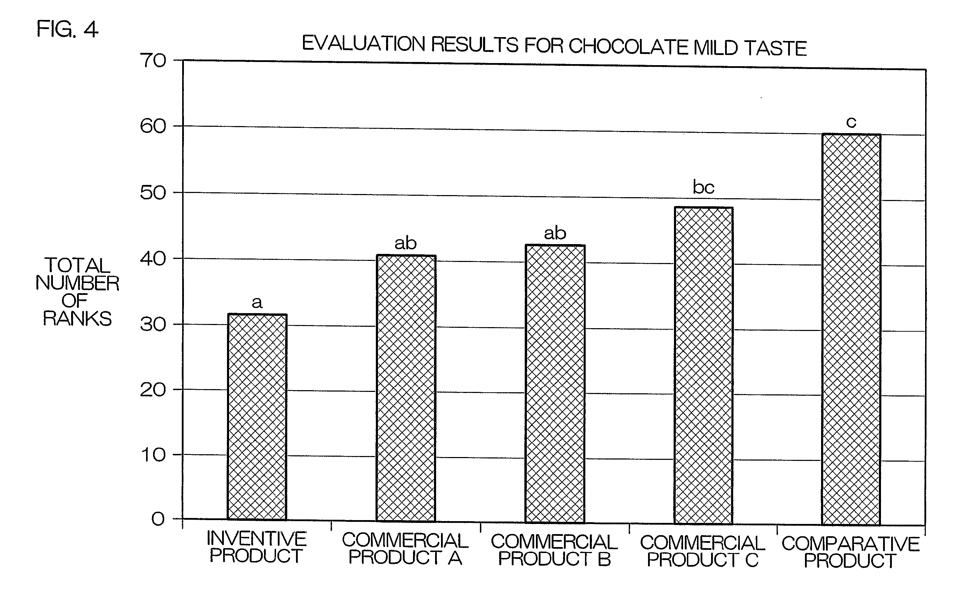

The results are shown in Table 6 and FIG. 4. The inventive product, the commercial product A, the commercial product B, the commercial product C and the comparative product were ranked in this order for the chocolate mild taste based on the total number of ranks. As a result of the significant difference validation test, there was no significant difference between the inventive product, the commercial product A and the commercial product B, but the inventive product had a significant difference from the commercial product C and the comparative product. Thus, the inventive product was proved to be more remarkable in chocolate mild taste than the commercial product C and the comparative product.

### (3) Smooth Melt-in-Mouth Texture

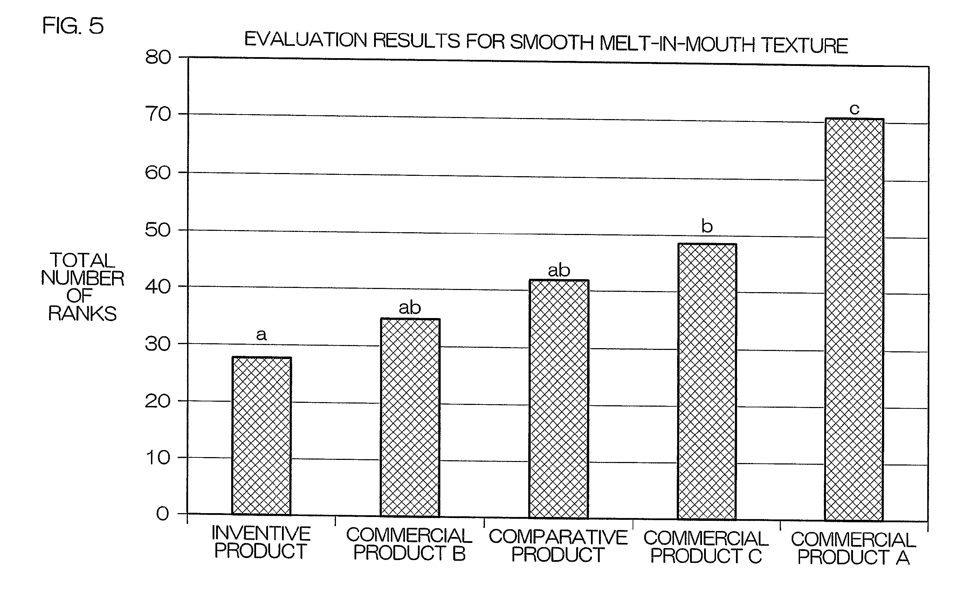

The results are shown in Table 7 and FIG. 5. The inventive product, the commercial product B, the comparative product, the commercial product C and the commercial product A were ranked in this order for the smooth melt-in-mouth texture based on the total number of ranks. As a result of the significant difference validation test, there was no significant difference between the inventive product, the commercial product B and the comparative product, but the inventive product had a significant difference from the commercial product C and the commercial product A. Thus, the inventive product was proved to be more remarkable in smooth melt-in-mouth texture than the commercial product C and the commercial product A.

The organoleptic evaluation results indicate that the chocolate-impregnated confectionery product 10 according to the embodiment of the present invention has the light eating texture (crispy eating texture) intrinsic to the confectionery base, and the mild taste (chocolate taste) and the smooth melt-in-mouth texture intrinsic to the chocolate.

It should be understood that the present invention be not limited to the embodiment described above, but various modifications may be made within the scope of the present invention defined by the appended claims.

### INDUSTRIAL APPLICABILITY

According to the present invention, the novel chocolate-impregnated confectionery product is provided which has a light eating texture intrinsic to the confectionery base, and a mild taste and a smooth melt-in-mouth texture intrinsic to the chocolate. This makes it possible to increasingly activate the chocolate confectionery market.

### DESCRIPTION OF REFERENCE CHARACTERS

- 10:: CHOCOLATE-IMPREGNATED CONFECTIONERY PRODUCT
- 11:: TEXTURED WAFER
- 12:: CHOCOLATE
- 111:: PLATE BASE PORTION
- 112:: SURFACE OF BASE PORTION
- 113:: PROJECTION
- 114:: OTHER SURFACE OF BASE PORTION
- T:: THICKNESS OF TEXTURED WAFER 11
- h:: HEIGHT OF PROJECTION 113
- t:: THICKNESS OF BASE PORTION 111

## Claims

1. A chocolate-impregnated confectionery product comprising:
a textured confectionery base; and
chocolate infiltrated in the confectionery base;
wherein the chocolate is present in a weight percentage of 77 to 85 % based on an overall weight of the confectionery product.

2. The chocolate-impregnated confectionery product according to claim 1,
wherein the textured confectionery base includes a plate base portion and a projection provided on at least one of opposite surfaces of the base portion,
wherein the projection has a height that is substantially equal to a thickness of the base portion.

3. The chocolate-impregnated confectionery product according to claim 1 or 2, wherein the projection includes a lattice-shaped projection as seen in plan.

4. The chocolate-impregnated confectionery product according to any one of claims 1 to 3, wherein the textured confectionery base is a confectionery base prepared by baking a batter comprising flour and greater than 50 wt% of water based on an overall weight of the batter and having a post-baking weight that is less than a weight obtained by subtracting a weight of the water from the overall weight of the batter.

5. The chocolate-impregnated confectionery product according to any one of claims 1 to 4, wherein the textured confectionery base is a textured wafer.

6. A chocolate-impregnated confectionery product comprising:
a textured wafer; and
chocolate infiltrated in the textured wafer;
wherein the textured wafer includes a plate base portion and a projection provided on at least one of opposite surfaces of the base portion, and the projection has a height substantially equal to a thickness of the base portion.
